# EUROPEAN PATENT SPECIFICATION

(11) **EP 1 799 778 B1**
(45) Date of publication and mention of the grant of the patent: **01.04.2009**
(21) Application number: 05785871.4
(22) Date of filing: 16.09.2005
(51) Int. Cl.: C09D 11/00, B41J 2/01, B41M 5/00, C09C 1/00, C09C 3/06, C09C 3/08

(54) **RECORDING INK, INK CARTRIDGE, INKJET RECORDING APPARATUS, INKJET RECORDING METHOD AND INK RECORD**
AUFZEICHNUNGSTINTE, TINTENPATRONE, TINTENSTRAHLAUFZEICHNUNGSVORRICHTUNG, TINTENSTRAHLAUFZEICHNUNGSVERFAHREN UND TINTENAUFZEICHNUNG
ENCRE D'ENREGISTREMENT, CARTOUCHE D'ENCRE, APPAREIL D'ENREGISTREMENT A JET D'ENCRE, PROCEDE D'ENREGISTREMENT A JET D'ENCRE ET ENREGISTREMENT PAR ENCRE

(30) Priority: 16.09.2004 JP 2004269442
(43) Date of publication of application: 27.06.2007
(73) Proprietor: Ricoh Company, Ltd., Tokyo 143-8555 (JP)
(72) Inventor: MATSUYAMA, Akihiko, Isehara-shi, Kanagawa; 2591116 (JP)
(74) Representative: Barz, Peter
(86) International application number: PCT/JP2005/017539
(87) International publication number: WO 2006/030976

(56) References cited:
- JP-A- 7 310 027
- JP-A- 2003 049 097
- JP-A- 2003 049 097
- JP-A- 2003 268 278
- JP-A- 2003 313 465
- JP-A- 2003 327 880
- JP-A- 2003 327 880

## Description

### Technical Field

The present invention relates to recording ink which excels in discharge stability with no head clogging at the time of printing resulting in an image production of good image retention capabilities such as waterproofness and light stability, etc. and is able to obtain a high quality image with good color tone on the regular paper as well as on an exclusive recording paper; ink cartridge, inkjet recording apparatus, inkjet recording method and ink record.

### Background Art

Recently, inkjet printers has been rapidly diffused for its advantageous properties such as low noise and low running cost and color printers which is printable on the regular paper has been actively put into the market. However, satisfying all the properties required such as color reproducibility, endurance, light stability, drying property, feathering and color bleed of images, duplex printing, discharge stability, and the like is very difficult for those inkjet printers, therefore inks which correspond to each preferred property are being selectively used instead.

The inks for inkjet printers in general consist mainly of water and contain colorant and moistening agent such as glycerin, and the like for anticlogging. Dyes, for its excellent color-producing property and stability, are used as colorant. However, light stability and waterproofness, etc. of the images produced by dye's inks are not satisfactory. Waterproofness may be improved somehow by upgrading the inkjet recording paper containing ink absorber layer, however, it is unsatisfactory for the regular paper.

Recently, a pigment ink, of which a pigment such as organic pigment, carbon black, and the like instead of dyes is reduced to particles using surfactants or dispersants and dispersed in a medium such as water, is being investigated for use as a colorant. For example, the process for improving discharge stability in which an organic pigment is reduced to particles of 50nm or less in diameter using specific dispersant, is disclosed in Patent Literatures 1 and 2. And an ink for inkjet printing using specific organic pigment and anionic dispersant is disclosed in Patent Literature 3.

However, using any dispersant does not help atomizing smaller than primary particle of the organic pigment and making diameter of the primary particle of the organic pigment 50nm or less without degrading color tone is almost impossible. When a low-molecular dispersant is used, scratch resistance and waterproofness are low, and when a high-molecular dispersant is used, scratch resistance and waterproofness are insufficient.

Because inkjet recording requires a stable discharge of ink droplets from a microscopic nozzle of the inkjet recording head, ink solidification caused by drying of orifice of the inkjet recording head should be avoided. However, when an ink in which an organic pigment is dispersed is used for the inkjet recording, clogging or no discharge of the ink may occur. Especially when printing is suspended for a long period, the clogging of nozzle, etc. are likely to occur, and the thickened ink may be deposited in the maintenance mechanism such as inside the nozzle caps or suction tubes, hindering functions of the maintenance mechanism. Furthermore, when printing was temporarily suspended, or the nozzle corresponding to the space of printing documents or images having spaces was suspended for a while, there have been a lot of problems such as printing failures (intermittent discharge failures) caused by distorted injection direction of ink droplets.

The other dispersion method of organic pigments include surface reforming pigment ink by which the surface of the pigment particles may be stably dispersed without dispersant by modifying it with carboxyl group, carbonyl group, sulfone group and hydroxyl group, and the like and giving hydrophilic property. The surface reforming carbon black, a black pigment ink by which the pigment particles can be stably dispersed without dispersant by introducing hydrophilic groups on the surface of carbon, has been developed. A color pigment ink by which the pigment particles can be stably dispersed without dispersant has also been developed. However, scratch resistance and waterproofness of these surface reforming pigment inks on the regular paper or exclusive gloss paper were not sufficient.

To solve these problems, an inkjet ink utilizing the dispersing element of micro-capsule or emulsion type by which the pigment particles are coated with resin is proposed. In this proposal, since the pigment particles are coated solidly by resin, dispersion may be stable for a long period and the discharge stability may be improved somewhat, however, it is difficult to reduce the dispersion particle diameter to 100nm or less even coating with a pigment of the primary particle diameter of 50nm to 100nm.

An inkjet ink is proposed in Patent Literatures 4 and 5 wherein the particle diameter of contained color materials is made into a uniform nanometer size by attaching dyes to the surface of a metal oxide and coating the surface with an ionic group-containing organic compound. By this proposal, waterproofness is improved somewhat compared to the ink utilizing dyes; however, light stability is inferior to the dye ink therefore not appropriate for actual use.

If a dispersant is used for dispersion of above pigment, or if the surface of the pigment is made hydrophilic, a method in which a polymer is added to the ink for making up insufficient waterproofness and scratch resistance may be used, however, it is impossible to obtain sufficient waterproofness with soluble polymer. For this reason, a method of using a water dispersible polymer particle is proposed. However, if the water dispersible polymer particle remains in a form of a particle on the ink record after printing, the particle may easily be re-dispersed in water and therefore waterproofness is not sufficient.

Recently, a composite pigment by which an organic pigment is coated around the inorganic pigment particle is proposed. If the inorganic pigment particle of around 5nm to 50nm is utilized as a core material, it is possible to obtain a coloring pigment of less than 100nm even when being coated with an organic pigment. The composite pigment color material of 10nm to 20nm has been proposed and practically applied as disclosed in Patent Literatures 6 and 7. And applying these composite pigment particles to dyes or inkjet inks are also proposed as disclosed in Patent Literatures 8 and 9. However, these inks do not contain resins for fixing and waterproofness and scratch resistance of ink records are insufficient.

Examples of ink composition containing polymers include an ink in which pigment and polymer emulsion are dispersed in water as outlined in Patent Literature 10, an ink in which a pigment is dispersed in water-insoluble polymer emulsion / dispersion as outlined in Patent Literature 11 and an ink using an emulsion having specified film-forming temperature as outlined in Patent Literature 12.

To improve fixing ability of composite pigment particles, proposals are outlined in Patent Literatures 8, 9, 13, 14, 15, 16, 17 and 18. In some proposals, approaches are done to give a dispersant a fixing function by using high-molecular dispersant, however, because high-molecular dispersant is highly water-soluble, sufficient waterproofness cannot be obtained although scratch resistance may be in sufficient level.

Furthermore, an ink containing emulsion resin for improving waterproofness of ink records utilizing these composite pigment particles is proposed in Patent Literature 19. However, because this emulsion resin is water dispersible, it becomes re-dispersed when ink records get wet; therefore cannot prevent the outflow of color material pigment particles.

| | |
|---|---|
| Patent Literature 1 | Japanese Patent Application Laid-Open (JP-A) No. 09-263720 |
| Patent Literature 2 | JP-A No. 09-263722 |
| Patent Literature 3 | JP-A No. 2002-088286 |
| Patent Literature 4 | JP-A No. 11-166127 |
| Patent Literature 5 | JP-A No. 2001-192582 |
| Patent Literature 6 | JP-A No. 2002-146231 |
| Patent Literature 7 | JP-A No. 2002-161221 |
| Patent Literature 8 | JP-A No. 2003-049096 |
| Patent Literature 9 | JP-A No. 2003-055591 |
| Patent Literature 10 | JP-A No. 62-001426 |
| Patent Literature 11 | JP-A No. 55-157668 |
| Patent Literature 12 | JP-A No. 01-217088 |
| Patent Literature 13 | JP-A No. 2003-105229 |
| Patent Literature 14 | JP-A No. 2003-171594 |
| Patent Literature 15 | JP-A No. 2003-192938 |
| Patent Literature 16 | JP-A No. 2003-327866 |
| Patent Literature 17 | JP-A No. 2003-268278 |
| Patent Literature 18 | JP-A No. 2003-327880 |
| Patent Literature 19 | JP-A No. 2003-049097 |

### Disclosure of Invention

An object of the present invention is to provide recording ink which excels in discharge stability with no head clogging at the time of printing resulting in an image production of good image retention capabilities such as waterproofness and light stability, etc. and is able to obtain a high quality image with good color tone on the regular paper as well as on the exclusive recording paper; ink cartridge, inkjet recording method, inkjet recording apparatus and ink record that utilize the recording ink respectively.

The recording ink of the present invention comprises a color material particle, a polymer particle, a water soluble solvent and water, wherein the color material particle is an inorganic pigment particle coated with one of organic pigment and carbon black.

Because the recording ink of the present invention comprises inorganic/organic composite pigment and polymer particles, the inkjet ink record of excellent color producing property, light stability, wear resistance and waterproofness can be provided.

The aspects of recording ink of the present invention, wherein the inorganic pigment particle is at least one selected from titanium dioxide particle, silica particle, alumina particle, iron oxide particle, iron hydroxide particle and tin oxide particle; the organic pigment is at least one selected from aniline black pigment, phthalocyanine pigment, quinacridone pigment, monoazo yellow pigment, disazo yellow pigment and heterocyclic yellow pigment; the color material particle is dispersed in water and the water contains at least one of anionic surfactant and optionally a nonionic surfactant; and the anionic surfactant is one expressed by the following Formula (1).

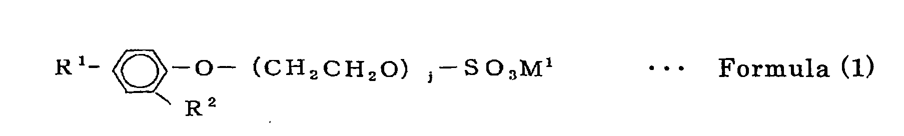

In the Formula (1), R¹ represents alkyl group, benzyl group, styryl group, distyryl group. R² represents hydrogen atom, alkyl group or styryl group. "j" represents an integer of 5 to 20. M¹ represents alkali metal, ammonium, phosphonium or alkanolamine.

The recording ink of the present invention, by utilizing inorganic pigment, can provide inorganic/organic composite pigment of small diameter particles with excellent light stability. Additionally, by utilizing organic pigment, the inorganic/organic composite pigment of excellent light stability can be provided. And by utilizing anionic surfactant or nonionic surfactant, an ink of excellent discharge stability can be provided. By utilizing sulfonic acid compound in the Formula (1), the dispersion particles can be atomized and an ink of excellent discharge stability can be provided. Furthermore, by introducing a hydrophilic group on the surface of the particles, the dispersion particles can be atomized and an ink of excellent discharge stability can be provided.

The aspects of recording ink of the present invention, wherein one of carboxyl group, carbonyl group, sulfone group and hydroxyl group is bonded on the surface of the color material particles and the color material particles are dispersed in water; the volume average particle diameter of the color material particles is 5nm to 100nm; the polymer particle comprises film-forming property after printing on a recording medium and the minimum film-forming temperature of the polymer particle is 30°C or less; the polymer particle comprises self-crosslinking property after printing on the recording medium; the volume average particle diameter of the polymer particle is 5nm to 200nm; the water-soluble solvent is at least one of glycerin, diethylene glycol, 1,3-butanediol and 3-methyl-1,3-butanediol; one of polyol compound having carbon number 8 or more and glycol ether compound is comprised ; the pH controlling agent is comprised and the pH controlling agent is at least one of alcohol amines, alkali metal hydroxides, ammonium hydroxides, phosphonium hydroxides and alkali metal carbonates and the pH is 7 or more and less than 11; the surface tension is 35mN/m or less; and the ink is at least one selected from cyan ink, magenta ink, yellow ink and black ink, are preferable.

The recording ink of the present invention, by adjusting the volume average particle diameter of color material particle to be 5nm to 100nm, can improve color developing ability. And adjusting the volume average particle diameter of polymer particles to be 5nm to 200nm will provide an ink of excellent discharge stability. By having the polymer particle with the minimum film-forming temperature of 30°C or less, it is possible to provide an ink record of excellent wear resistance and waterproofness at a room temperature. Furthermore, it is possible to provide an ink record of excellent wear resistance and waterproofness by the polymer particle having self-crosslinking property. It is also possible to provide an ink of excellent discharge stability by having glycerin, diethylene glycol, 1,3-butanediol or 3-methyl-1,3-butanediol as water-soluble solvent. Moreover, color developing ability can be improved by containing polyol having carbon number 8 or more or glycolether. In addition, containing anionic or nonionic surfactant decreases surface tension and improves color developing ability and discharge stability, and having pH of 7 or more and less than 11 makes possible to obtain a stable dispersion condition and discharge stability. Likewise, adjusting the surface tension to be 35mN/m or less can offer advantages in improving color developing ability and discharge stability.

The inkjet cartridge of the present invention comprises the recording ink of the present invention in a container.

The inkjet recording apparatus of the present invention comprises an ink drop discharging unit configured to discharge the recording ink drops to form an image by stimulating the recording ink of the present invention.

In the aspect of the inkjet recording apparatus of the present invention, the stimulation is preferably at least one selected from heat, pressure, vibration and light.

The inkjet recording method comprises an ink drop discharging to form an image by stimulating the recording ink of the present invention.

In the aspect of the inkjet recording method of the present invention, the stimulation is preferably at least one selected from heat, pressure, vibration and light.

An ink record of excellent color developing ability, light stability, wear resistance and waterproofness can be provided by the inkjet recording method of the present invention. In the invention, by applying thermal energy to the ink to stimulate the ink drop discharge, the recording ink of the present invention can be stably discharged. And by conducting an ink drop discharge by applying thermodynamic energy to the ink, a stable discharge of the recording ink of the present invention is possible.

The ink record of the present invention comprises an image formed on a recording medium using the recording ink of the present invention. The ink record of the present invention offers advantages in excellent color developing ability, light stability, wear resistance and waterproofness.

### Brief Description of Drawings

FIG. 1 is an outlined front view of an exemplary serial-type inkjet recording apparatus equipped with the ink cartridge which contains the recording ink of the present invention.
FIG. 2 is an external perspective view of an exemplary ink cartridge before being installed in the inkjet recording apparatus.
FIG. 3 is a front sectional view of an exemplary ink cartridge of the present invention.
FIG. 4 is an external perspective view of an exemplary recording unit unified with a recording head.

### Best Mode for Carrying Out the Invention

### (Recording Ink)

The recording ink of the present invention comprises a color material particle which is an inorganic pigment particle coated with one of organic pigment and carbon black, a polymer particle, a water soluble solvent, water and other elements as disclosed in claim 1.

### - The Color Material Particle which is an Inorganic Pigment Particle coated with one of Organic Pigment and Carbon Black-

The color material particle which is an inorganic pigment particle coated with one of organic pigment and carbon black may be produced by the processes such as deposition of organic pigment in the presence of inorganic pigment particles, mechanical mixing, abrasion and cracking of the inorganic/organic pigments, and the like. For example, a chemical vapor deposition technique may be applied when coating with a thermostable organic pigment. Furthermore, by placing the organosilane compound layer generated from poly siloxane and alkylsilane between inorganic pigment particles and organic pigment will enhance the adhesiveness of both.

Examples of inorganic pigment particles include titanium dioxide particle, silica particle, alumina particle, iron oxide particle, iron hydroxide particle, tin oxide particle, and the like. The figure of inorganic pigment particle is preferably small in aspect ratio and more preferably in a spherical form. The color of inorganic pigment particle is preferably transparent or white when attaching a colored color material on the surface, however, when black color material is attached on the surface, black inorganic pigment can be used.

The primary volume particle diameter of inorganic pigment particle, which may be referred to as "primary particle diameter", is preferably 100nm or less and more preferably 5nm to 50nm.

Examples of organic pigment include aniline black as a black pigment, anthraquinone, phthalocyanine blue, phthalocyanine green, diaso, monoazo, pyranthoron, perylene, heterocyclic yellow, quinacridone, (thio)indigoid as color pigments, and the like.

Of these, phthalocyanine pigments, quinacridone pigments, monoazo yellow pigments, disazo yellow pigments and heterocyclic yellow pigments are especially preferable in terms of color developing ability.

Examples of phthalocyanine pigments include copper phthalocyanine blue and derivatives thereof (C.I. pigment blue 15:3, 15:4), aluminum phthalocyanine, and the like.

Examples of quinacridone pigments include C.I. pigment orange 48, C.I. pigment orange 49, C.I. pigment red 122, C.I. pigment red 192, C.I. pigment red 202, C.I. pigment red 206, C.I. pigment red 207, C.I. pigment red 209, C.I. pigment violet 19, C.I. pigment violet 42, and the like.

Examples of monoazo yellow pigments include C.I. pigment yellow 74, C.I. pigment yellow 109, C.I. pigment yellow 128, C.I. pigment yellow 151, and the like.

Examples of disazo yellow pigments include C.I. pigment yellow 14, C.I. pigment yellow 16, C.I. pigment yellow 17, and the like.

Examples of heterocyclic yellow pigments include C.I. pigment yellow 117, C.I. pigment yellow 138, and the like.

Other coloring pigments may be found in the third edition of "The Colour Index" by The Society of Dyers and Colourists (1982), and the like.

The mass ratio of the inorganic pigment particle to the organic pigment or carbon black as a color material, inorganic pigment particle : color material, is preferably 3:1 to 1:3 and more preferably 3:2 to 1:2. If the mass ratio of the color material is small, color developing ability or tinctorial power may be deteriorated and if the mass ratio of the color material increases, transparency or color tones may be deteriorated.

Examples of color material particle which is an inorganic pigment particle coated with organic pigment or carbon black include composite materials by Toda Kogyo Corporation such as silica/carbon black composite material, silica/phthalocyanine C.I. pigment blue 15:3 composite material, silica/disazo yellow composite material, silica/quinacridone C.I. pigment red 122 composite material, and the like. The primary particle diameter of these examples is small, therefore suitable for use.

If an inorganic pigment particle with the primary particle diameter of 20nm is coated with an equivalent amount of organic pigment, the primary particle diameter of this pigment become about 25nm. If this pigment can be dispersed into the primary particle using an appropriate dispersant, an extremely fine pigment-dispersed ink with a dispersing particle diameter of 25nm can be produced.

In the composite pigment, the organic pigment on the surface is not the only one contributing to the dispersion, but the properties of inorganic pigment in the center become also apparent through the thin film of organic pigment with thickness of about 2.5nm, and selecting the dispersant that can disperse and stabilize both elements simultaneously is difficult. However, using the compound expressed by the following Formula (1) makes it possible to stably disperse the inorganic/organic composite pigment to as close as the primary particle diameter.

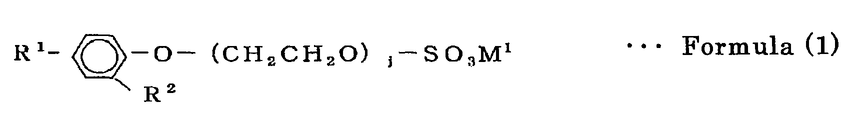

In the Formula (1), R¹ represents alkyl group, benzyl group, styryl group or distyryl group. Examples of alkyl group include straight-chained or branched alkyl group having carbon number 1 to 12.

R² represents hydrogen atom, alkyl group, benzyl group or styryl group. Example of alkyl group include straight-chained or branched alkyl group having carbon number 1 to 12.

"j" represents an integer of 5 to 20. M¹ represents alkali metal, ammonium, phosphonium or alkanolamine.

Examples of anionic surfactant include polyoxyethylene alkylether acetate, dodecylbenzen sulfonate, sodium laurylate, polyoxyethylene alkylether sulfonate, oleate, polycarboxylic acid or polycarboxylate, alkylbenzen sulfonate, maleic dialkylester sulfonic acid or maleic dialkylester sulfonate, and the like.

Examples of the compound expressed by above Formula (1) are the following.

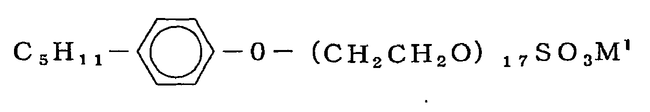

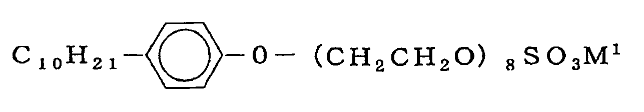

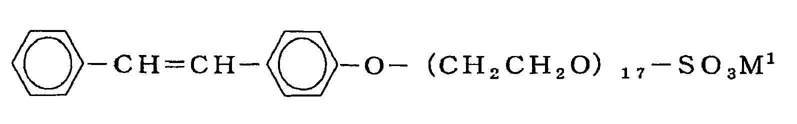

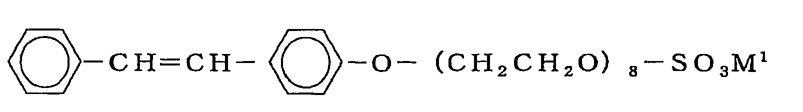

In the above Formula, M¹ represents NH₄ or Na.

A dispersing element may be produced by the process using apparatuses such as homogenizer for high-speed stirring, dispersion kneader using balls such as bead mill and ball mill, dispersion kneader using shear force such as roll mill, ultrasonic disperser, and the like after a dispersant is dissolved in an aqueous medium and a color material, in which the inorganic pigment particle is contained in the organic pigment, is added to become moistened sufficiently. However, bulky particles are often included after these kneading and dispersing processes, causing clogging of inkjet nozzle or feeding path and it is essential to remove the particles of 1µm or more diameter by filters or centrifugal machines.

The amount of the dispersant used relative to the amount of pigment color material is preferably 1% by mass to 100% by mass and more preferably 10% by mass to 50% by mass. If the amount of dispersant is small, the pigment is not atomized sufficiently, and if the amount of dispersant is excessively large, the excessive element not attached to the pigment effect ink properties leading to image blurring or deterioration of waterproofness and wear resistance. The volume average particle diameter of color material particle of the invention is preferably 5nm to 100nm and more preferably 5nm to 50nm.

The content of dispersion particle in the recording ink, in terms of the solid content combining pigment and dispersant, is preferably 2% by mass to 20% by mass and more preferably 4% by mass to 15% by mass. The content of the color material particle in the ink is preferably 1% by mass to 20% by mass and more preferably 2% by mass to 15% by mass.

In the invention, it is preferable to use the color material pigment particle of which the surface is hydrophilized by treating with carboxyl group, carbonyl group, sulfone group, hydroxyl group, etc. and dispersed in water. The surface may be treated by the known processes such as oxidation, azo reaction, plasma treatment, and the like.

Although the ink record using the recording ink of the invention contains only about half of the color material such as organic pigment or carbon black, and the like, it exhibits almost 70% to 90% of tinctorial power compared to the ink containing only organic pigment or carbon black. Therefore it is possible to obtain an ink record of image density almost equivalent to that of the ink containing only organic pigment or carbon black by increasing the pigment density in the ink by about 10% to 30%. And the brightness (luminance) and vividness (saturation) of the color can be effectively increased by using the composite pigment of the invention in color ink records. Specifically it is very effective on the gloss paper, used for printing photographic images as a recording medium for inkjet, and the vivid image obtained is almost equivalent to the ink record using dye ink.

### -Polymer Particle-

The film-forming property of polymer particle means when a polymer particle is dispersed in water to form an emulsion, a resin film is formed as the moisture of aqueous emulsion evaporates. Similarly, in the ink composition into which the polymer particle is added, a film is formed by evaporating the volatile element to strongly fixate the color material pigment in the ink on the recording medium. Therefore it becomes possible to obtain an image of excellent scratch resistance and waterproofness.

Since polymer particle forms a film at a room temperature, it is preferably having the minimum film-forming temperature of 30°C or less and more preferably 10°C or less.

The minimum film-forming temperature stated here is the minimum temperature at which a sequential transparent film is formed when the polymer emulsion obtained by dispersing polymer particle in water, is flow-casted on a metal board such as aluminum while temperature is increased.

The volume average particle diameter of the polymer particle is preferably 5nm to 200nm and more preferably 10nm to 100nm.

It is possible to use a polymer particle of single particle structure. For example, having alkoxysilyl group in the emulsion particle induces a contact with residual water with a fusion between emulsions by water evaporation in the film-forming process and a silanol group is formed by hydrolysis. Furthermore, a firm crosslinked structure by siloxane bonding is formed as a result of the reaction between silanol group and residual alkoxysilyl group or between silanol groups. This property, in which a reaction is performed between reactive functional groups, which are being coexisted in the polymer particle, without adding curing agent in the film-forming to form a network, is called "self-crosslinking property" in the present invention.

On the other hand, it is also possible to use a polymer particle having core-shell structure that is made up with a core part and surrounding shell part. The "core-shell structure" is defined as "an aspect in which two or more polymers of different composition exist in a particle in a state of phase-separation". Consequently, an aspect in which the shell part covers part of the core, as well as an aspect in which the shell part completely covers the core, is possible. Or an aspect in which a part of the shell-part polymer is forming a domain in the core particle is also possible. Furthermore, a multilayer structure of three or more layers containing one or more layers of different composition between core part and shell part is also possible.

The polymer particle can be obtained by known processes such as polymerization catalyst and emulsion polymerization in water where an emulsifier exists of unsaturated vinyl monomer, etc.

The content of the polymer particle in the recording ink is preferably 0.5% by mass to 20% by mass and more preferably 1% by mass to 5% by mass. If the content is less than 0.5% by mass, scratch resistance and waterproofness may not be satisfactory. If the content is more than 20% by mass, ink discharge may become unstable due to increased viscosity by drying or fixation of polymer element causing clogging of the nozzle.

### -Water-Soluble Solvent-

The ink of the present invention uses water as a liquid medium; however, a water-soluble solvent is used in order to prevent drying of the ink and to improve dispersion stability, etc. The water-soluble solvent may be used in combination.

Examples of water-soluble solvent include polyvalent alcohols, polyvalent alcohol alkyl ethers, polyvalent alcohol alyl ethers, nitrogen-containing heterocyclic compounds, amides, amines, sulfur-containing compounds such as propylene carbonate, ethylene carbonate, and the like.

Examples of polyvalent alcohols include glycerin, diethylene glycol, 1,3-butanediol, 3-methyl-1,3-butanediol, triethylene glycol, propylene glycol, dipropylene glycol, trimethylol propane, trimethylol ethane, ethylene glycol, tripropylene glycol, tetraethylene glycol, hexylene glycol, polyethylene glycol, polypropylene glycol, 1,5-pentanediol, 1,6-hexanediol, glycerol, 1,2,6-hexanetriol, 1,2,4-butanetriol, 1,2,3-butanetriol, petriol, and the like.

Examples of polyvalent alcohol alkyl ethers include ethylene glycol monoethyl ether, ethylene glycol monobutyl ether, diethylene glycol monomethyl ether, diethylene glycol monoethyl ether, diethylene glycol monobutyl ether, tetraethylene glycol monomethyl ether, propylene glycol monoethyl ether, and the like.

Examples of polyvalent alcohol aryl ethers include ethylene glycol monophenyl ether, ethylene glycol monobenzyl ether, and the like.

Examples of nitrogen-containing heterocyclic compound include 2-pyrrolidone, N-methyl-2-pyrrolidone, N-hydroxyethyl-2-pyrrolidone, 1,3-dimethyl imidazoledione, ε-caprolactam, γ-butyrolactone, and the like.

Examples of amides include formamide, N-methyl formamide, N,N-dimethyl formamide, and the like.

Examples of amines include monoethanol amine, diethanol amine, triethanol amine, monoethyl amine, diethyl amine, triethyl amine, and the like.

Examples of sulfur-containing compound include dimethyl sulfoxide, sulfolane, thiodiethanol, and the like.

Of these organic solvents, glycerin, diethylene glycol, 1,3-butanediol, 3-methyl-1,3-butanediol are especially preferable. These solvents have favorable effects over solubility and prevention of injection-quality defects caused by water evaporation.

Sugars are also preferable. Examples of sugars include monomeric sugars, two sugars, oligosaccharides (including trisaccharide and tetrasaccharide) and polysaccharides. Specific examples include glucose, mannose, fructose, ribose, xylose, arabinose, galactose, maltose, cellobiose, lactose, sucrose, trehalose, malt triose, and the like.

The polysaccharides stated here are defined as sugars in a broad sense, which contain matters that broadly exist in the realm of nature such as α-cyclodextrin, cellulose, and the like.

Derivatives of these sugars include reducing sugar of the above sugars such as sugar alcohol expressed by General Formula: HOCH₂ (CHOH) nCH₂OH where "n" represents an integer of 2 to 5, saccharides such as aldonic acid, uronic acid, and the like, amino acid, thio acid, and the like. Of these, sugar alcohol is preferable and specific examples thereof include maltitol, sorbitol, and the like.

The ratio of the color material particle to the water-soluble solvent significantly affects the discharge stability from head. If the blending quantity of moistening agent is relatively small even though the solid content of pigment is large, water evaporation near the ink meniscus of the nozzle progresses and may result in a discharge failure.

Specifically, using glycerin, diethylene glycol, 1,3-butanediol, 3-methyl-1,3-butanediol as water-soluble solvent will make it possible to produce an ink of excellent preservation stability and discharge stability.

The blending quantity of water-soluble solvent is preferably 10% by mass to 50% by mass. The ratio of moistening agent to the solid content of pigment particle including dispersant is preferably 0.67 to 12.5 and more preferably 1.0 to 6.0, and most preferably 2.0 to 4.0. The recording ink within this range provides very favorable results in drying property, preservation test or reliability test.

Adding a penetrating agent into the ink will decrease the surface tension and accelerates the penetration into a recording medium after an ink droplet is landed on the recording medium such as paper, and possibly reduces the feathering or color bleed. An appropriate range of the surface tension of the invention is 35mN/m or less. Generally, anionic surfactant or nonionic surfactant is used as a penetrating agent and the surfactant that does not interfere with dispersing stability is selected based on the type of the color material or the combination of moistening agent and water-soluble organic solvent.

Examples of anionic surfactant include polyoxyethylene alkylether acetate, dodecylbenzen sulfonate, sodium laurylate, polyoxyethylene alkylether sulfonate, and the like.

Examples of nonionic surfactant include polyol, glycol ether, polyoxyethylene alkylether, polyoxyethylene alkylester, polyoxyethylene sorbitan fatty ester, polyoxyethylene alkylphenyl ether, polyoxyethylene alkylamine, polyoxyethylene alkylamide, acetylene glycol, and the like.

Examples of acetylene glycol surfactants include acetylene glycols such as 2,4,7,9-tetramethyl-5-dithine-4,7-diol, 3,6-dimethyl-4-octine-3,6-diol, 3,5-dimethyl-1-hexane-3-ol, and the like. Specific examples include Surfynol 104, 82, 465, 485 or TG by Air Products and Chemicals, Inc. and of these, Surfynol 465, 104 or TG are preferable for exhibiting appropriate printing quality.

The surfactant may be used alone or in combination.

Specifically, using polyol compounds having carbon number of 8 or more and 11 or less, 2-ethyl-1,3-hexanediol, 2,2,4-trimethyl-1,3-pentanediol, or surfactant expressed by the following Formulas (2) to (7) will provide more appropriate printing quality.

R²-O-(CH₂CH₂O)ₘCH₂COOM² Formula (2)

In the Formula (2), R² represents alkyl group having carbon number 6 to 14 which may be branched. "m" represents an integer of 3 to 12. M² represents alkali metal, quaternary ammonium, quaternary phosphonium or alkanolamine.

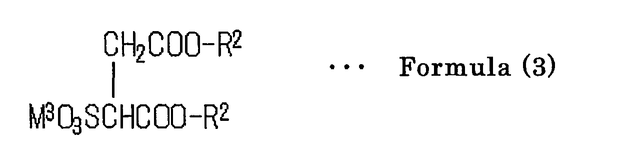

In the Formula (3), R3 represents branched alkyl group having carbon number 5 to 16. M3 represents alkali metal, quaternary ammonium, quaternary phosphonium or alkanolamine.

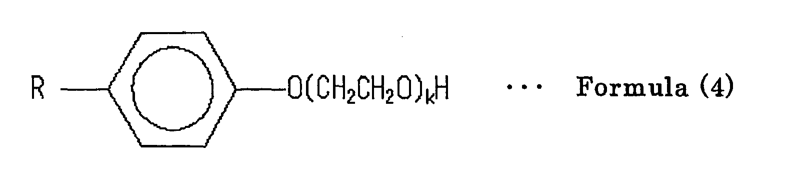

In the Formula (4), R represents a group having carbon number 6 to 14 having carbon chains which may be branched. "k" represents an integer of 5 to 20.

R⁵-(OCH₂CH₂)₁OH Formula (5)

In the Formula (5), R⁵ represents a group having carbon number 6 to 14 having carbon chains which may be branched. "1" represents an integer of 5 to 20. 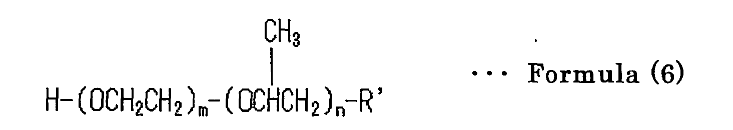 or

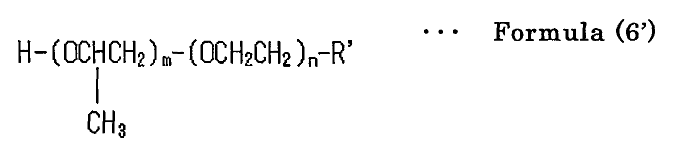

In the Formula (6) or (6'), R'represents a group having carbon number 6 to 14 having carbon chains.
Each"m"and"n"represents an integer of 0 to 20.

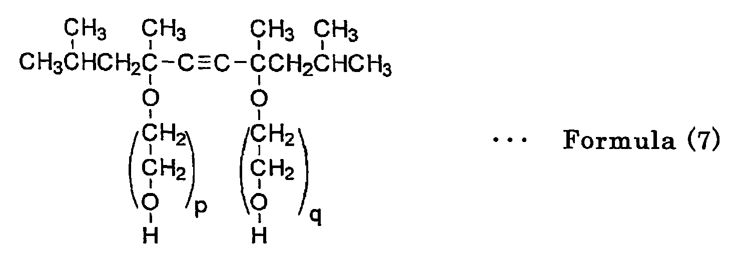

In the Formula (7), each "p" and "q" represents an integer of 0 to 40.

The composite pigment used in the invention has a strong tendency to exhibit acidic property when being knead/dispersed in water with anionic dispersant. The surface of the composite pigment particle which is dispersed in an aqueous medium is covered with anionic dispersant therefore being negatively charged, however, since the whole ink exhibits acidic property, the medium itself is positively charged and the negative charge on the particle surface tends to get neutralized. This condition induces an aggregation of dispersed particles possibly causing a discharge failure. The discharge may be stabilized by adding pH controlling agent and preserving an alkaline state to stabilize dispersion. The pH of the recording ink is preferably 7 or more and less than 11. If the pH is 11 or more, large amount of materials of inkjet head or ink feeding unit become melted, causing problems such as deterioration, leaks or discharge failure, etc. of the ink.

Adding pH controlling agent when pigments are being knead/dispersed with a dispersant in water is more preferable than adding it with additives such as moistening agent, penetrating agent, and the like after knead/dispersing. This is because some pH controlling agent may destruct dispersion when added.

Examples of pH controlling agent include alcohol amines, alkali metal hydroxide, ammonium hydroxide, phosphonium hydroxide, alkali metal carbonate, and the like.

Examples of alcohol amines include diethanol amine, triethanol amine, 2-amino-2-ethyl-1,3propanediol, and the like.

Examples of alkali metal hydroxide include lithium hydroxide, sodium hydroxide, kalium hydroxide, and the like.

Examples of ammonium hydroxide include ammonium hydroxide, quaternary ammonium hydroxide, quaternary phosphonium hydroxide, and the like.

Examples of alkali metal carbonate include lithium carbonate, sodium carbonate, kalium carbonate, and the like.

A cogation preventing agent may be added to the recording ink as necessary.

The cogation stated here is defined as a phenomenon in which a recording-liquid element is deteriorated when the recording liquid is heated and the deteriorated element become attached to the heater, and it is a failure associated with a thermal-type head by which an electric current is applied to the heater to heat up the recording liquid instantaneously and the recording liquid is discharged using the foaming power of recording liquid.

When cogation occurs, heating by the heater does not function properly, and discharging power may be weakened or the recording liquid is not discharged at all at worst. For this reason, a cogation preventing agent may be added to the recording liquid usable in the invention to prevent cogation.

Examples of cogation preventing agent include polyphosphoric acid, polyaminocarboxylic acid, aldonic acid, hydroxycarboxylic acid, polyol phosphate ester, and salt thereof, or acidum and/or salt having amino group, ammonium salt of acidum having methyl group or methylene group and calboxyl group, and the like.

Examples of polyphosphoric acids include pyrophoric acid, toripolyphosphoric acid, hexametaphosphoric acid, and the like.

Examples of polyaminocarboxylic acid include dicarbonates such as oxalic acid, malonic acid, succinic acid, glutaric acid, and the like, ethylenediaminetetraacetate, iminodiacetic acid, nitrilotri acetate, and the like.

Examples of aldonic acid include glycolic acid, glyceric acid, gluconic acid, galactonic acid, glucoheptonate, and the like.

Examples of hydroxycarboxylic acid, also known as oxycarboxylic acid, include citric acid, malic acid, lactic acid, glycolic acid, glyceric acid, mandelic acid, tartaric acid, and the like.

Examples of polyolphosphate esters include α-glycerophosphoric acid, β- glycerophosphoric acid, and the like.

Of these examples, hydroxycarboxylic acids, also known as oxycarboxylic acids, such as citric acid, gluconic acid (also exist in a form of δ-gluconolactone and γ-gluconolactone as solid), malic acid, lactic acid, glycolic acid, tartaric acid, and the like, α-glycerophosphoric acid and β- glycerophosphoric acid, and the like are preferable for their high solubility in water, and citric acid and gluconic acid are especially preferable. These compounds may be used in a form of an acid or a salt. In particular, they may be used in a form of alkali metal salt, ammonium salt, organic amine salt such as triethanolamine, diethanolamine, monoethanolamine, triisopropanolamine, and the like.

When using a salt, compounds commercially available in a form of a salt may be used as it is, or an organic acid salt produced by adding an alkaline chemical may be used. Examples of alkaline chemicals used for producing an organic acid salt include lithium hydroxide, sodium hydroxide, potassium hydroxide, ammonium water (ammonium hydroxide), organic amines such as triethanol amine, diethanol amine, monoethanol amine, diisopropanol amine, triisopropanol amine, tetramethylammonium hydroxide, tetraethylammonium hydroxide, tetra-n-propylammonium hydroxide, and the like. Of these organic acid salts, ammonium salt is especially preferable.

The cogation preventing agent may be used alone or in combination of above listed compounds. Total content of the cogation preventing agent relative to the whole amount of the recording ink is preferably 0.005% by mass to 20% by mass and more preferably 0.05% by mass to 12% by mass. Keeping the content within this range will make it possible to obtain an ink which significantly decreases cogation and prevent nozzle clogging of the recording head when coexisting with acidum and/or salt having amino group which is described later.

Examples of acidum and/or salt having amino group include amidosulfuric acid (also known as sulfamic acid), aminomethanesulfonic acid, taurine (also known as 2-aminoethanesulfonic acid), carbamic acid, glycine, alanine, asparagine acid, glutamic acid, phenylalanine, leucine, isoleucine, threonine, tryptophan, valinemethionine, lysine, and the like. Of these examples, compounds having sulfone group is preferable, because of its high water solubility and improving effect on head operating life. Examples of such compounds include amidosulfuric acid (also known as sulfamic acid), aminomethanesulfonic acid, taurine (also known as 2-aminoethanesulfonic acid). Of these, taurine (also known as 2-aminoethanesulfonic acid) is especially preferable because it is easily obtainable.

When using acidum and/or salt having amino groups, compounds commercially available in a form of salt may be used as it is, or an organic acid salt produced by adding an alkaline chemical may be used. Examples of alkaline chemicals used for producing an organic acid salt include lithium hydroxide, sodium hydroxide, potassium hydroxide, ammonium water (ammonium hydroxide), organic amines such as triethanol amine, diethanol amine, monoethanol amine, diisopropanol amine, triisopropanol amine, tetramethylammonium hydroxide, tetraethylammonium hydroxide, tetra-n-propylammonium hydroxide, and the like. Of these, ammonium salt of an organic acid having amino group is especially preferable.

These compounds may be used alone or in combination. The total content of acidum and/or salt having amino group relative to the whole amount of the recording ink is preferably 0.005% by mass to 20% by mass and more preferably 0.05% by mass to 12% by mass. Keeping the content within this range will make it possible to obtain an ink which significantly decreases cogation and prevent nozzle clogging of the recording head when coexisting with polyphosphoric acid, polyaminocarboxylic acid, aldonic acid, hydroxycarboxylic acid, polyol phosphate ester, and salt thereof.

The mass ratio of the content of polyphosphoric acid, polyaminocarboxylic acid, aldonic acid, hydroxycarboxylic acid, polyol phosphate ester, and salt thereof in the ink to the total content of acidum and/or salt having amino group is preferably 20:1 to 1:20 for the ink of this invention. If the ratio stays within this range, effect of decreasing cogation to the heater is exerted satisfactory and the damage of the outermost surface of the heater is effectively prevented.

Ammonium salt of acidum having methyl group or mathylene group and carboxyl group is preferably the one having almost no effect on the color tone of the ink optically. In other words, it is preferable that the solution of acidum itself is not colored optically, at least. The carbon number within one molecule of the acidum is preferably 10 or less and the oxygen number within one molecule is preferably 3 to 6. Examples of such acidum include malonic acid, succinic acid, glutaric acid, adipic acid, lactic acid, malic acid, asparagine acid, glutamic acid, and the like.

Above-mentioned ammonium salt of acidum having methyl group or mathylene group and carboxyl group may be used alone or in combination. The total content of at least one compound selected from ammonium salt of acidum having methyl group or mathylene group and carboxyl group relative to the whole amount of the recording ink is preferably 0.005% by mass to 20% by mass and more preferably 0.05% by mass to 15% by mass in terms of sufficient decreasing effect of cogation or adequacy for inkjet printing (such as seldom occurrence of clogging of the inkjet recording head, and the like).

It is also effective to control phosphorus concentration in the recording liquid for preventing cogation. By controlling the phosphorus concentration to be 500ppm or less, cogation can be effectively prevented even after a long storage of the ink and the resulting stable discharge of the ink will lead to stable high-quality images.

The mechanism of accelerating the cogation on the heater that leads to a rapid decrease in discharge amount when phosphorus concentration is high may be considered as follow. The inorganic phosphoric compound in the ink is heated by the heater inside the nozzle and makes a compound with calcium that is eluted from inside the ink or ink wetted materials such as nozzle, tank, and the like and become attached to the heater. Because the compound of phosphorus and calcium (calcium phosphate, hydroxyapatite, and the like) is very hard and poorly-soluble, there is no possibility of re-dissolution or separation and once attached to the heater, the burnt deposit that has been separated or re-dissolved by cavitation tends to attach on the heater. By this mechanism, accumulation of carbon burnt deposit that did not occur when there was no phosphoric burnt deposit is thought to appear at an accelerating rate and the foaming is inhibited thereby rapidly decreasing the discharge amount. The reason for attachment acceleration of carbon burnt deposit caused by the burnt deposit of small amount of phosphorus and calcium is unclear; however, it is assumed to be caused by the minute asperity on the heater produced by the attachment of burnt deposit of phosphorus and calcium into which carbon burnt deposit get through.

Conventionally known additives such as antiseptic/antifungal agent, chelating agent, rust-preventive agent, and the like may be added to the ink of the invention other than above-mentioned elements.

Examples of antiseptic/antifungal agent include sodium dehydroacetate, sodium sorbate, 2-pyridinethiol-1-oxide sodium, sodium benzoate, pentachlorophenol sodium, and the like.

Examples of chelating agent include sodium ethylenediamine tetraacetate, sodium nitrilotriacetate, sodium hydroxyethyl ethylenediaminetriacetate, sodium diethylenetriaminepentaacetate, sodium uramil diacetate, and the like.

Examples of rust-preventive agent include acid sulfite, sodium thiosulfate, ammonium thiodiglycolate, diisopropyl ammonium nitrite, pentaerythritol tetranitrate, dicyclohexylammonium nitrite, and the like.

Other additives such as water-soluble UV ray absorber, water-soluble infrared ray absorber, and the like can be added as necessary.

The color of the recording ink according to the present invention is not limited and may be selected accordingly, and examples include cyan, magenta, yellow, and black. When an ink set containing two or more colors are utilized for recording, multicolor images may be formed; when an ink set containing the whole color is utilized for recording, full-color images may be formed.

### (Ink Cartridge)

The ink cartridge of the invention comprises the recording ink of the invention in a container and other members suitably selected accordingly.

The container is no limited and the shape, configuration, size, material and the like of the container may be selected accordingly and the suitable examples include containers comprising ink bag that is formed of plastic container, aluminum laminated film, resin film, and the like.

### (Inkjet Recording Apparatus and Inkjet Recording Method)

The inkjet recording apparatus of the invention comprises at least an ink drop discharging unit and other units such as stimulation generating unit, controlling unit, and the like as necessary.

The inkjet recording method of the invention comprises at least an ink drop discharging step and other units such as stimulation generating unit, controlling unit, and the like as necessary.

The inkjet recording method of the invention may be preferably performed by the inkjet recording apparatus of the invention and ink drop discharging step may be preferably performed by ink drop discharging unit. Other steps may be preferably performed by other units respectively.

### -Ink drop discharging step and Ink Drop Discharging Unit -

The ink drop discharging step discharges the recording ink by stimulating the recording ink to form an image. The ink drop discharging unit is configured to discharge the recording ink by stimulating the recording ink to form an image. The ink drop discharging unit is not particularly limited and may be selected accordingly and examples may be various nozzles for discharging ink.

In the invention, at least a part of liquid compartment, fluid resistance part, diaphragm and nozzle member of the inkjet head is preferably formed of the materials containing at least silicone or nickel.

The diameter of inkjet nozzle is preferably 30µm or less and more preferably 1µm to 20µm.

The stimulation may be generated through above-noted stimulation generating unit, for example. The stimulation is not limited and may be selected accordingly. Examples include heat, pressure, vibration and light. These may be employed alone or in combination. Among these, heat and pressure are suitable.

Specifically, examples of the stimulation generating unit include heating device, pressure device, piezoelectric element, vibration generating device, ultrasonic generating device, light, and the like, and in particular, piezoelectric actuator such as piezoelectric element, thermal actuator based on phase-change of the film between liquid and vapor using electothermal transducer such as heating resistor, shape memory alloy actuator based on phase-change depending on the temperature, electrostatic actuator based on electrostatic power, and the like are exemplified.

The aspect of recording ink discharge is not limited and differs depending on the stimulation. If the stimulation is generated by "heat", such process is exemplified as thermal energy corresponding to the recording signal is applied on the recording ink in the recording head by using a thermal head, then bubbles are generated in the recording ink through thermal energy, thereby injecting the recording ink from the nozzle of the recording head in a form of ink drops owing to the bubble pressure. Alternatively, if the stimulation is generated by "pressure", such process is exemplified as a voltage is applied to a piezoelectric element adhered on so-called pressure room in the ink flowing passage of the recording head, causing the piezoelectric element to be deflected, thereby reducing the volume of the pressure room, and injecting the recording ink from the nozzle of the recording head in a form of ink drops.

The ink drops of the recording ink discharged is preferably 3pl to 40pl in size at an injection speed of 5m/s to 20m/s, drive frequency of 1kHz or more and resolution of 300dpi.

In addition, the controlling unit is not limited as long as it can control the individual unit efficiently and may be selected accordingly. Examples thereof include sequencer, computer, and the like.

Herein below, the inkjet recording method and inkjet recording apparatus of the invention are explained referring to attached drawings, however, the following is one of the examples and should not be construed as limiting the scope of this invention.

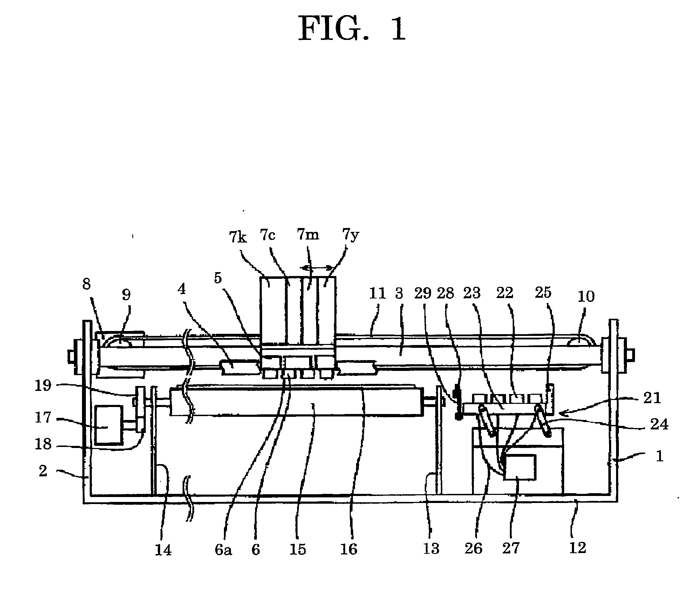

FIG. 1 is an outlined front view of an exemplary serial-type inkjet recording apparatus equipped with the ink cartridge which has a recording ink compartment containing the recording ink of the invention.

In the mechanical section of the inkjet recording apparatus, the main guide rod 3 and the sub-guide rod 4 are bridged laterally between the side panels 1 and 2 in almost horizontal position and the carriage unit 5 is supported by the main guide rod 3 and the sub guide rod 4 in the main scanning direction as slidable. Each four of the head 6 which discharges yellow (Y) ink, magenta (M) ink, cyan (C) ink and black (Bk) ink respectively, is mounted on the carriage unit 5 with each discharging side [nozzle side] 6a facing downward. The four ink cartridges 7y, 7m, 7c and 7k as ink feeders for each color are mounted on the upper side of the head 6, the carriage unit 5 as exchangeable.

The carriage unit 5 is then attached to the timing belt 11 which is extended between the drive pulley (drive timing pulley) 9 rotated by the main scanning motor 8 and the sub-drive pulley (idle pulley) 10 to control the drive of the main scanning motor 8 and the carriage 5, that is, four head 6 is moved into the main scanning direction.

Furthermore, by setting up the sub-frames 13 and 14 on the floor plate 12 which hooks up the side plates 1 and 2, the transport roller 15, by which the paper 16 is transported in the sub-scanning direction crossing the main scanning direction at a right angle, is placed rotatable between the sub-frames 13 and 14. And the sub-scanning motor 17 is placed on the side of the sub-frame 14 and the gear 18 is fixed on the rotation axis of the sub-scanning motor 17 and the gear19 is fixed onto the axis of the transport roller 15 in order to transmit the rotation of the sub-scanning motor 17 to the transport roller 15.

The restorative system for liability 21 of the head 6 (hereafter referred to as "sub-system") is placed between the side plate 1 and the sub-frame 12. In the sub-system 21, the holder 23, which keeps the four cap units 22 for capping the discharging side of each head 6, is kept by the link member 24 as swingable and the carriage unit 5 touches the catching part 25 mounted on the holder 23 by the movement in the main scanning direction. The holder 23 is lifted up following with the movement of the carriage unit 5 and the discharging side 6a of inkjet head 6 is capped with the cap unit 22 and the carriage unit 5 is moved further into the printing area. The holder 23 is then lifted down with the movement of the carriage unit 5 and the cap unit 22 is separated from the discharging side 6a of the inkjet head 6.

The cap unit 22 is connected with the suction pump 27 via the suction tube 26 while simultaneously being communicated with air via air open tube and air open bulb by forming an air opening. The suction pump 27 discharges suctioned waste solution into the waste solution storage tank which is not shown in figures via drain tubes, etc.

The wiper blade 28, as a wiping unit which may be of fabric, foaming or elastic members such as rubber, and the like with which the discharging side 6a of the inkjet head 6 is wiped, is mounted onto the blade arm 29 on the side of the holder 23. The blade arm 29 is set up as swingable and it is swinged by the rotation of the cam that is rotated by the drive unit which is not shown in figures.

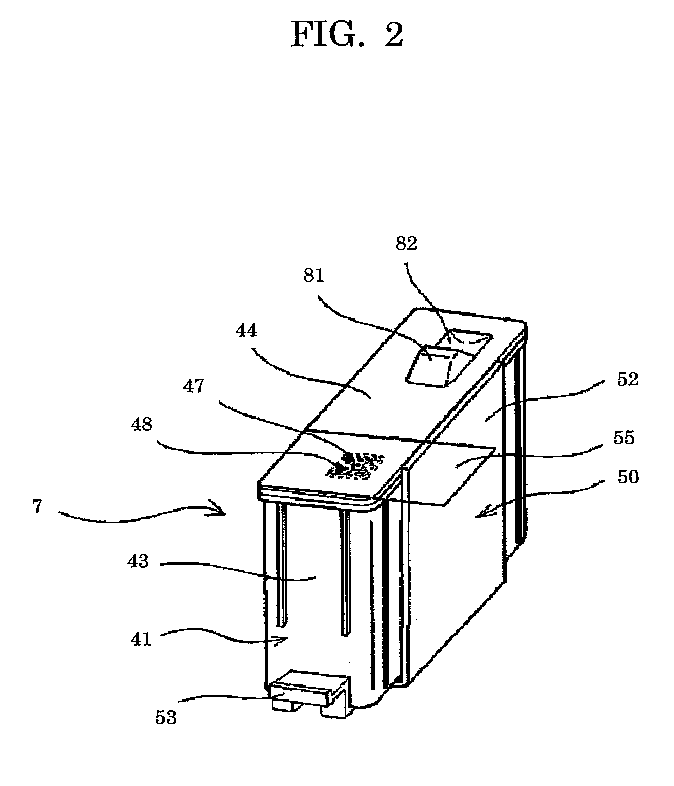

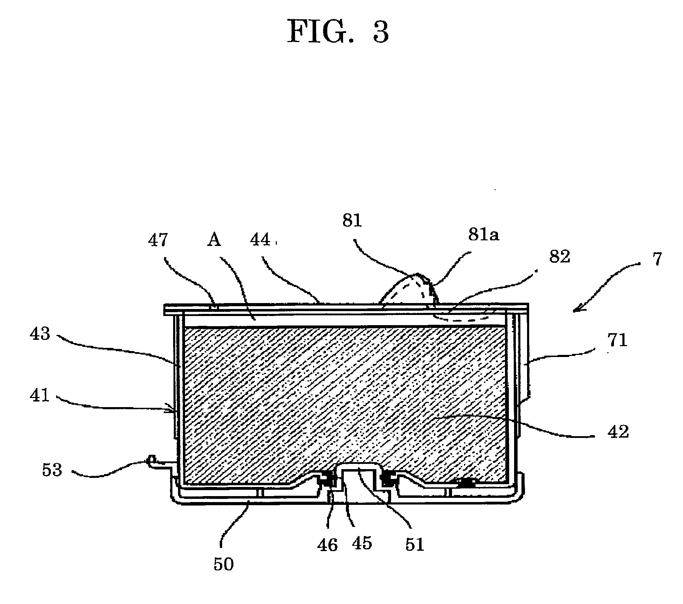

The ink cartridge 7 is explained referring to the FIG. 2 and 3. FIG. 2 is an external perspective view of the ink cartridge before being mounted in the inkjet recording apparatus and FIG. 3 is a frontal sectional view of the ink cartridge.

The ink cartridge 7 as shown in FIG.3 contains the ink absorber 42 into which the required ink is absorbed in the cartridge body 41. The cartridge body 41 is formed by bonding or depositing the bonnet member 44 on the upper wide opening of the case 43 and may be of moldings, for example. And the ink absorber 42 is made up with a porous body such as urethane foam and the ink is absorbed after it is compressed and inserted into the cartridge body 41.

The ink feed opening 45, by which the ink is fed into the recording head 6, is formed on the bottom part of the case 43 of cartridge body 41 and the sealing ring 46 is snapped into the inner peripheral side of the ink feed opening 45. The air opening 47 is formed on the bonnet member 44.

The cap member 50 is attached onto the cartridge body 41 in order to block off the ink feed opening 45 before being filled and to prevent leakage of the ink caused by the compressive deformation of the case 43 at times such as being filled, transported or pressurized with the wide sidewall when being vacuum-packed.

The air opening 47 as shown in FIG. 2 is sealed by attaching the seal member 55 in a form of a film with oxygen transmission rate of 100ml/m² or more to the bonnet member 44. The size of the seal member 55 is adjusted so as to cover 48 multiple grooves formed around the air opening 47 as well as air opening 47. By sealing air opening 47 with the seal member 55 of oxygen transmission rate of 100ml/m² or more, and by packaging ink cartridge 7 with a non-porous packaging member such as aluminum laminated film, etc. under reduced pressure, even when being filled with ink or gas is dissolved in the ink due to the air in the space A (shown in FIG.3) formed between the ink absorber 42 and cartridge body 41, the air inside the ink is discharged into the high-vacuum space between the cartridge body 41 and the packaging member via seal member 55 and deaeration of the ink improves.

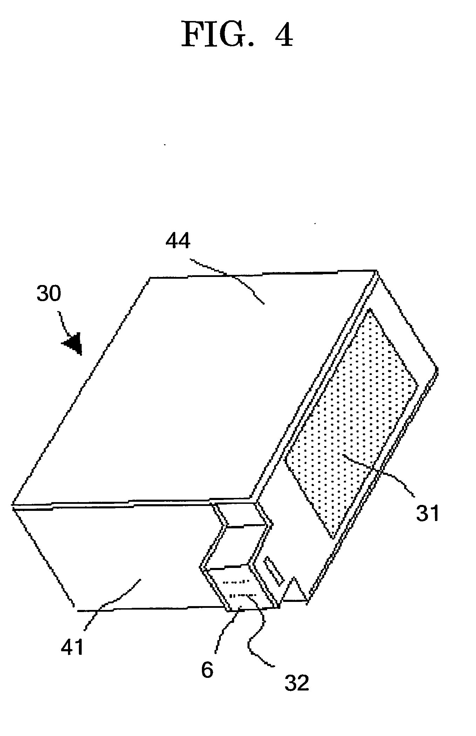

The recording liquid containing part wherein the recording liquid is contained and the recording cartridge equipped with a head by which the ink drops of the recording liquid is discharged referring to the configuration example shown in FIG. 4.

The recording unit 30 is a serial type, and the main part is lined up with the inkjet head 6, ink tank 41 in which the recording liquid fed from the inkjet head 6 is contained, and the cap member by which inside the ink tank 41 is sealed. A lot of nozzle 32 for discharging recording liquid is formed on the inkjet head 6. The recording liquid is led from the ink tank 41 to the common liquid chamber (not shown in figures) via ink feeding tube (not shown) and discharged from the nozzle 32 corresponding to the electric signals that are entered by the electrode 31 from the recording apparatus body. This type of recording unit is structurally favorable for the affordable head powered by thermal energy which is referred to as thermal-type or bubble-type.

The wetting ability of the recording ink of the invention to the thermal element, in terms of recording method such as bubble or thermal type, etc. is improved, thereby ink discharging stability and frequency stability can be obtained with only a small addition and it is highly safe and is extremely suitable.

Although examples are only applied to the serial type inkjet recording apparatus hereinbefore, the recording liquid of the invention is also applicable to the inkjet recording apparatus equipped with a line type head, wherein the nozzles are aligned in a voluntary order such as zigzag, etc. and the density is concentrated to the degree as same as or a fraction of the image resolution and aligned more wider than a recording medium.

The recording apparatus stated here may be a multi functional apparatus with a combination of facsimile, scanner and telephone as well as output printers for PC or digital camera.

### (Ink Record)

An ink record recorded by the ink jet recording apparatus and inkjet recording method of the invention is the ink record of the invention. The ink record of the invention comprises an image formed on a recording medium by the recording ink of the invention.

The recording medium is not limited and may be selected accordingly and examples thereof include regular paper, gloss paper, special paper, cloth, film, overhead projection (OHP) sheet, and the like. These may be used alone or in combination.

The ink record may suitably be used for various purposes as a material on which an image of high-quality and excellent stability with no blur is recorded.

Conventional problems can be solved by the present invention, and recording ink which excels in discharge stability with no head clogging at the time of printing resulting in an image production of good image retention capabilities such as waterproofness and light stability, etc. and is able to obtain a high quality image with good color tones on a regular paper as well as on an exclusive recording paper, ink cartridge using the recording ink, inkjet recording apparatus, inkjet recording method and ink record, can be provided.

The examples of the invention are explained as follow; however, these are not to be construed as limiting the scope of the invention. All percentages and parts are by mass unless indicated otherwise.

### Example

### (Example 1)

### <Mill Base Formula>

· silica / disazo yellow composite pigment 16 parts
   (having 1/1 mass ratio of inorganic pigment particle to organic pigment and the primary particle of 17nm by Toda Kogyo Corp.)
· polyoxyethylene laurylether expressed by following Structural Formula as a nonionic surfactant 6 parts

   C₁₂H₂₅-O-(CH₂CH₂O)₄₃H
· deionized water 78 parts

### <Ink Formula>

· above-produced mill base 100 parts
· VONCOAT 4001 8 parts
   (an acrylic aqueous emulsion having the minimum film-forming temperature of 5°C, the volume average particle diameter of 100nm and solid parts of 50% by mass by Dainippon Ink And Chemicals, Inc.)
· glycerin 10 parts
· triethylene glycol 25 parts
· 2,2,4-trimethyl-1,3-pentanediol 4 parts
· surfactant expressed by following Structural Formula 4 parts

   C₁₃H₂₇-O-(CH₂CH₂O)₃CH₂COONa
· Proxel LV (antiseptic /antifungal agent) 0.2 parts
· deionized water 48.8 parts

Next, polyoxyethylene laurylether was dissolved in deionized water and above pigment was mixed and moistened to a satisfactory extent. Zircornia beads of 0.5mm diameter was filled into a kneading apparatus, DYNO-Mill KDL A by W. A. Bachofen of Switzerland, and knead-mixed at 2,000rpm for 2 hours to obtain a mill base. The measured volume average particle diameter of the color material pigment was 20nm. The average particle diameter was measured by UPA 150 by Microtrac, Inc.

Next, VONCOAT 4001, glycerin, triethylene glycol, 2,2,4-trimethyl-1,3-pentanediol, surfactant expressed by above Structural Formula, triethanol amine and Proxel LV were dissolved in deionized water to produce a vehicle, and the vehicle was mixed with the mill base and then filtered by Tefron™-made filter of 1µm average pore diameter to produce a yellow ink for inkjet recording.

### (Example 2)

A yellow ink for inkjet recording was produced similarly to Example 1 using the same mill base and ink formula as Example 1, except for VONCOAT 4001 was replaced by HYDRAN HW-940.

HYDRAN HW-940 is a polyester urethane aqueous ionomer having the minimum film-forming temperature of 0°C, volume average particle diameter of 20nm and solid parts of 50% by mass by Dainippon Ink And Chemicals, Inc.

### (Example 3)

A yellow ink for inkjet recording was produced similarly to Example 1 using the same mill base and ink formula as Example 1, except for VONCOAT 4001 was replaced by WEM-321U.

WEM-321U is an acryl-urethane-core shell type aqueous emulsion and has a self-crosslinking property after printing and drying. It has the minimum film-forming temperature of 10°C, volume average particle diameter of 100nm, solid parts of 38% by mass and acryl / urethane ratio of 50/50 by Taisei Finechemical Co., Ltd.

### (Example 4)

### <Mill Base Formula>

· silica / quinacridone C.I. Pigment Red 122 composite pigment 18 parts
   (having 1/1 mass ratio of inorganic pigment particle to organic pigment and the primary particle diameter of 16nm by Toda Kogyo Corp.)
· anionic surfactant expressed by following Structural Formula 8 parts 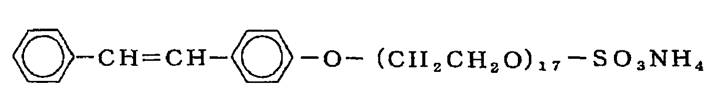
· deionized water 74 parts

### <Ink Formula>

· above-produced mill base 100 parts
· VONCOAT 4001 5 parts
   (an acrylic aqueous emulsion having the minimum film-forming temperature of 5°C, volume average particle diameter of 100nm and solid parts of 50% by mass by Dainippon Ink And Chemicals, Inc.)
· glycerin 10 parts
· 1,3-butanediol 30 parts
· 2-ethyl-1,3-hexanediol 4 parts
· surfactant expressed by following Structural Formula 4 parts

   C₁₃H₂₇-(OCH₂CH₂)₈OH
· 2-amino-2-ethyl-1,3 propanediol 0.3 parts
· Proxel LV (antiseptic /antifungal agent) 0.2 parts
· deionized water 46.5 parts

Next, following the mill base formula, a mill base of the color material pigment with volume average particle diameter of 60nm was produced by the similar method as Example 1.
VONCOAT 4001, glycerin, 1,3-butanediol, 2-ethyl-1,3-hexanediol, surfactant expressed by following Structural Formula, 2-amino-2-ethyl-1,3 propanediol and Proxel LV were dissolved in deionized water to produce a vehicle. The vehicle was then mixed with the mill base and filtered with Tefron™-made filter of 1µm average pore diameter to obtain a magenta ink for inkjet recording.

### (Example 5)

A magenta ink for inkjet recording was produced similarly to Example 4 using the same mill base and ink formula as Example 4 except for VONCOAT 4001 was replaced by HYDRAN HW-940.

HYDRAN HW-940 is a polyester urethane aqueous ionomer having the minimum film-forming temperature of 0° C, volume average particle diameter of 20nm and solid parts of 50% by mass by Dainippon Ink And Chemicals, Inc.

### (Example 6)

A magenta ink for inkjet recording was produced similarly to Example 4 using the same mill base and ink formula as Example 4 except for VONCOAT 4001 was replaced by WEM-321U.

WEM-321U is an acryl-urethane-core shell type aqueous emulsion and has a self-crosslinking property after printing and drying. It has the minimum film-forming temperature of 10° C, volume average particle diameter of 100nm, solid parts of 38% by mass and acryl / urethane ratio of 50/50 by Taisei Finechemical Co., Ltd.

### (Example 7)

### <Sulfonation of Composite Pigment Surface>

150 parts of silica / phthalocyanine C.I. Pigment Blue 15:3 composite pigment (with 1/1 mass ratio of inorganic pigment particle to organic pigment and the primary particle diameter of 16nm by Toda Kogyo Corp.) was well mixed in 400ml of sulfolane. This was then differentially scattered by a bead mill and 15 parts of amidosulforic acid was added and stirred at 140° C to 150° C for 10 hours.

Obtained slurry was then poured into 1,000ml of deionized water and a wet cake of surface-treated silica / phthalocyanine C.I. Pigment Blue 15:3 composite pigment was obtained by a centrifugal machine at 12,000rpm. This carbon black wet cake was re-dispersed in 2,000ml of deionized water and pH was adjusted with lithium hydroxide, followed by desalination and concentration by ultrafilteration and a carbon black dispersion liquid having a pigment concentration of 15% was obtained. This was then filtered by Tefron^{™}-made filter of 1µm average pore diameter to produce a cyan dispersion liquid in which cyan particles are dispersed. The volume average particle diameter of cyan particle was 90nm.

### <Ink Formula>

· above-produced cyan dispersion liquid 100 parts
· VONCOAT 4001 5 parts
   (an acrylic aqueous emulsion having the minimum film-forming temperature of 5° C, volume average particle diameter of 100nm and solid parts of 50% by mass by Dainippon Ink And Chemicals, Inc.)
· glycerin 10 parts
· 1,3-butanediol 30 parts
· 2-ethyl-1,3-hexanediol 4 parts
· surfactant expressed by following Structural Formula 4 parts

   C₁₃H₂₇-(OCH₂CH₂)₈OH
· 2-amino-2-ethyl-1,3 propanediol 0.3 parts
· Proxel LV (antiseptic /antifungal agent) 0.2 parts
· deionized water 46.5 parts

Next, VONCOAT 4001, glycerin, 1,3-butanediol, 2-ethyl-1,3-hexanediol, surfactant expressed by above Structural Formula, 2-amino-2-ethyl-1,3 propanediol and Proxel LV were dissolved in deionized water to produce a vehicle. It was then mixed with cyan dispersion liquid and filtered with Tefron^{™}-made filter of 1µm average pore diameter to produce a cyan ink for inkjet recording.

### (Example 8)

A cyan ink for inkjet recording was produced similarly to Example 7 using similar mill base and ink formula as Example 7, except for VONCOAT 4001 was replaced by HYDRAN HW-940.

HYDRAN HW-940 is a polyester urethane aqueous ionomer having the minimum film-forming temperature of 0° C, volume average particle diameter of 20nm and solid parts of 50% by mass by Dainippon Ink And Chemicals, Inc.

### (Example 9)

A cyan ink for inkjet recording was produced similarly to Example 7 using similar mill base and ink formula as Example 7, except for VONCOAT 4001 was replaced by WEM-321U.

WEM-321U is an acryl-urethane-core shell type aqueous emulsion and has a self-crosslinking property after printing and drying. It has the minimum film-forming temperature of 10° C, volume average particle diameter of 100nm, solid parts of 38% by mass and acryl / urethane ratio of 50/50 by Taisei Finechemical Co., Ltd.

### (Example 10)

### <Mill Base Formula>

· silica/carbon black composite pigment 18 parts
   (having 1/2 mass ratio of inorganic pigment particle to carbon black and the primary particle of 18nm by Toda Kogyo Corp.)
· polyoxyethylene laurylether (nonionic surfactant expressed by following Structural Formula) 8 parts

   C₁₂H₂₅-O-(CH₂CH₂O)₄₃H
· deionized water 74 parts

A black ink for inkjet recording was produced similarly to Example 1 using similar ink formula as Example 1.

### (Comparative Example 1)

A magenta ink for inkjet recording was produced similarly to Example 1 using the similar ink formula as Example 1, except for VONCOAT 4001 was replaced by Pesresin A-520 after making a mill base using similar mill base formula as Example 1.

Pesresin A-520 is a polyester-modified aqueous melt resin and its glass transition temperature, Tg is 55°C. (solid parts of 30% by Takamatsu Oil&Fat Co., Ltd.) Because it is dissolved in water, Pesresin A-520 should not be considered as a polymer particle or emulsion.

### (Comparative Example 2)

### <Mill Base Formula>

· phothalocyanine C.I. Pigment Blue 15:3 (ECB-301 by Dainichiseika Color&Chemicals Mfg. Co., Ltd.) 12 parts
· anionic surfactant expressed by following Structural Formula 5 parts 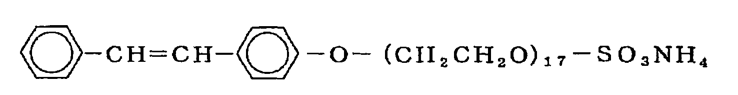
· deionized water 83 parts

Next, a mill base having volume average particle diameter of 100nm was produced similarly to Example 1 using above mill base formula and a cyan ink for inkjet recording was produced by the ink formula and method similar to Example 1.

### (Comparative Example 3)

### <Ink Formula>

· C.I. acid Red 52 (water-soluble dye) 3 parts
· glycerin 5 parts
· diethylene glycol 15 parts
· 2-ethyl-1,3-hexanediol 2 parts
· acetylene surfactant expressed by following Formula (7) 2 parts

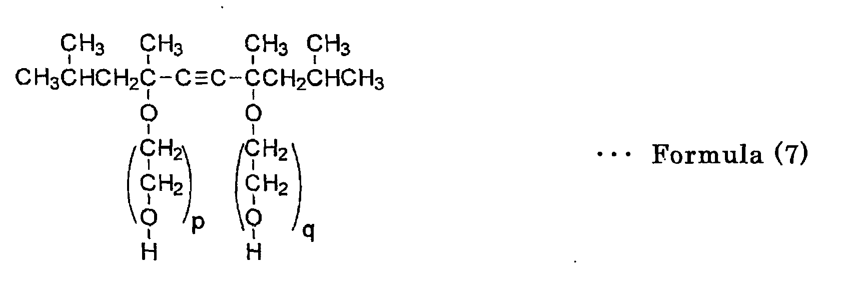

In above Formula (7), each "p" and "q" represents an integer of 10 to 12.
· sodium dehydroacetate 0.2 parts
· deionized water 72.8 parts

After composition of above ink formula was stirred and dissolved, pH was adjusted to be 10 with 10% solution of lithium hydroxide. This was filtered with Tefron^{™}-made filter of 0.20µm average pore diameter and a magenta ink for inkjet recording of different color material without polymer particle was produced.

### <Evaluation>

Next, various properties of each obtained recording ink of Example 1 to 9 and Comparative Example 1 to 3 was evaluated as following. The results are shown in Table 1.

### [1] Surface Tension Measurement

Surface tension of each recording ink of Examples and Comparative Examples were measured by CBVP-Z type by Kyowa Interface Science Co., Ltd.

### [2] pH Measurement

pH of each recording ink of Examples and Comparative Examples were measured by pH BOY-P2 by Shindengen Electric Manufacturing Co., Ltd.

### [3] Discharge Stability Evaluation

Each recording ink of Examples and Comparative Examples was fed into the inkjet printer, IPSIO G707 by Ricoh Company, Ltd. The recoverability when printing was halted without capping or cleaning during operation was investigated and each reliability, in terms of how long (in seconds) it will take for injecting direction to be misaligned or for mass of discharging ink drops to be altered, was evaluated by following standards

### <Evaluation Standards>

A: 600 seconds or more
B: 60 seconds or more and less than 600 seconds
C: less than 60 seconds

### [4] Saturation Measurement

Each recording ink of Examples and Comparative Examples was fed into the inkjet printer, IPSIO G707 by Ricoh Company, Ltd and each solid image was printed by one pass. Regular paper was used for printing test. After prints were dried, each value of brightness was obtained by a reflective color spectroscopic colorimetry densitometer by X-Rite. The ratio of each measured saturation value to the saturation value of Japan Color Version 2 (yellow: 91.34, magenta: 74.55, cyan: 62.82) were calculated and evaluated by following standards.

### <Paper for Printing Test>

| | |
|---|---|
| Regular paper: | My Paper SA by NBS Ricoh Co., Ltd. XEROX 4024 by Fuji Xerox Office Supply PB Paper by Canon Inc. |

### <Evaluation Standards>

A: 0.8 or more
B: 0.7 or more and less than 0.8
C: less than 0.7

### [5] Scratch Resistance

Each printed part of the image sample produced on the gloss paper by the method similar to saturation measurement was rubbed back and forth for 5 times using a white cotton cloth with a load of 900g by Crock Meter CM-1 by TOYO SEIKI Seisaku-sho, Ltd. Each sample was then observed with eyes and evaluated by following standards.

### <Paper used for Printing Test>

Gloss paper: PM Photo Print Paper (gloss) by Seiko Epson Corporation

Professional Photo paper PR-101 by Canon Inc.

### <Evaluation Standards>

A: image dropouts and blur on image surroundings are scarce
B: image dropouts are few, but blur can be seen on image surroundings
C: notable image dropouts and blur on image surroundings

### [6] Waterproofness

Water droplets were dripped on each printed part of the image sample produced on the regular paper by the method similar to saturation measurement. Each condition of ink records was then observed with eyes and evaluated by following standards.

### <Evaluation Standards>

A: remain the same
B: mark (water mark) is seen around the printed part received water droplets
C: smear on the surrounding area of the printed part received water droplets

### [7] Light Stability

Each image sample produced by the method similar to saturation measurement was radiated with 0.35W/m² (340nm) of xenon irradiance comparable to outdoor sunlight at 70° C, 50%RH and 89° C of black panel temperature for 24 hours using Atlas Weatherometer Ci35AW. Each reesulted color deterioration and alteration before and after the irradiation was evaluated by following standards shown below.

### <Evaluation Standards>

A: almost the same
B: alteration is recognized but acceptable
C: large degree of color deterioration and alteration

**Table 1**

| | [1] Surface Tension (mN/m) | [2] pH | [3] Ejecting Stability | [4] Saturation | [5] Scratch Resistance | [6] Waterproofness | [7] Light Stability |
|---|---|---|---|---|---|---|---|
| Example 1 | 31.7 | 7.6 | B | A | A | A | A |
| Example 2 | 30.1 | 7.9 | B | A | A | A | A |
| Example 3 | 30.5 | 7.2 | B | A | A | A | A |
| Example 4 | 30.9 | 8.9 | A | A | A | A | A |
| Example 5 | 31.3 | 9.2 | A | A | A | A | A |
| Example 6 | 31.0 | 9.0 | A | A | A | A | A |
| Example 7 | 32.3 | 9.2 | A | A | A | A | A |
| Example 8 | 31.9 | 9.7 | A | A | A | A | A |
| Example 9 | 31.5 | 10.0 | A | A | A | A | A |
| Example 10 | 30.9 | 8.1 | B | A | A | A | A |
| Comparative Example 1 | 31.6 | 8.8 | B | A | C | B | A |
| Comparative Example 2 | 32.0 | 9.5 | B | C | A | A | A |
| Comparative Example 3 | 30.9 | 8.8 | A | A | A | C | C |

From the results shown in Table 1, by using composite pigment ink containing polymer particle as shown in Examples 1 to 9, the recording ink and the ink record utilizing the recording ink, which has light stability comparable to organic pigment ink, brightness comparable to dye ink and high reliability on colorfastness resisting wear or water, can be obtained.

## Claims

1. A recording ink comprising:
a color material particle,
a polymer particle,
a water soluble solvent,
an anionic surfactant, and
water,
wherein the color material particle is an inorganic pigment particle coated with one of organic pigment and carbon black,
wherein the organic pigment comprises one selected from an aniline black pigment, a phthalocyanine pigment, a quinacridone pigment, a monoazo yellow pigment, a disazo yellow pigment and a heterocyclic yellow pigment, and
the anionic surfactant is a compound expressed by the following Formula (1). 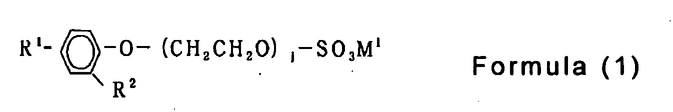 wherein in the Formula (1), R¹ represents alkyl group, benzyl group, styryl group or distyryl group, R² represents hydrogen atom, alkyl group, benzyl group or styryl group, "j"represents an integer of 5 to 20, and M¹ represents alkali metal, ammonium, phosphonium or alkanolamine.

2. The recording ink according to claim 1, wherein the inorganic pigment particle is one selected from titanium dioxide particle, silica particle, alumina particle, iron oxide particle, iron hydroxide particle and tin oxide particle.

3. The recording ink according to claim 1 or claim 2, wherein one of carboxyl group, carbonyl group, sulfone group and hydroxyl group is bonded on the surface of the color material particle and the color material particle is dispersed in the water.

4. The recording ink according to one of claims 1 to 3, wherein the volume average particle diameter of the color material particle is 5 nm to 100 nm.

5. The recording ink according to one of claims 1 to 4, wherein the volume average particle diameter of the polymer particle is 5 nm to 200 nm.

6. The recording ink according to one of claims 1 to 5, wherein the water soluble solvent is at least one selected from glycerin, diethylene glycol, 1,3-butanediol and 3-methyl-1,3-butanediol.

7. The recording ink according to one of claims 1 to 6, wherein the recording ink comprises one of polyol compound having carbon number 8 or more and glycol ether compound.

8. The recording ink according to one of claims 1 to 7, wherein the recording ink comprises a pH controlling agent and the pH controlling agent is at least one selected from alcohol amines, alkali metal hydroxides, ammonium hydroxides, phosphonium hydroxides and alkali metal carbonates, and the pH is 7 or more and less than 11.

9. The recording ink according to one of claims 1 to 8, wherein the recording ink is one selected from cyan ink, magenta ink, yellow ink and black ink.

10. An ink cartridge comprising:
a container; and
a recording ink according to one of claims 1 to 9,
wherein the recording ink is contained in a container.

11. An inkjet recording apparatus comprising:
an ink drop discharging unit configured to discharge a recording ink drops to form an image by stimulating the recording ink according to one of claims 1 to 9.

12. The inkjet recording apparatus according to claim 11, wherein the stimulation is at least one selected from heat, pressure, vibration and light.

13. An inkjet recording method comprising:
ink drop discharging to form an image by stimulating the recording ink according to one of claims 1 to 9.

14. The inkjet recording method according to claim 13, wherein the stimulation is at least one selected from heat, pressure, vibration and light.

15. An ink record comprising:
an image formed on a recording medium using the recording ink according to one of claims 1 to 9.

## Patentansprüche

1. Aufzeichnungstinte, umfassend:
ein Farbmaterialteilchen,
ein Polymerteilchen,
ein wasserlösliches Lösungsmittel,
ein anionisches Tensid und
Wasser,
wobei das Farbmaterialteilchen ein anorganisches Pigmentteilchen ist, das mit einem von organischem Pigment und Ruß beschichtet ist,
wobei das organische Pigment eines ausgewählt aus einem Anilinschwarzpigment, einem Phthalocyaninpigment, einem Chinacridonpigment, einem Monoazogelbpigment, einem Diazogelbpigment und einem heterocyclischen Gelbpigment umfasst und
das anionische Tensid eine durch die folgende Formel (1) dargestellte Verbindung ist 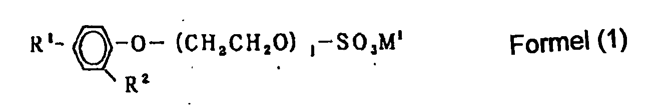 worin in der Formel (1) R¹ eine Alkylgruppe, Benzylgruppe, Styrylgruppe oder Distyrylgruppe ist, R² ein Wasserstoffatom, eine Alkylgruppe, Benzylgruppe oder Styrylgruppe ist, "j" eine ganze Zahl von 5 bis 20 ist und M¹ Alkalimetall, Ammonium, Phosphonium oder Alkanolamin darstellt.

2. Aufzeichnungstinte nach Anspruch 1, worin das anorganische Pigmentteilchen eines ausgewählt aus Titandioxid-Teilchen, Siliciumdioxid-Teilchen, Aluminiumoxid-Teilchen, Eisenoxid-Teilchen, Eisenhydroxid-Teilchen und Zinnoxid-Teilchen ist.

3. Aufzeichnungstinte nach Anspruch 1 oder Anspruch 2, worin eine von einer Carboxylgruppe, Carbonylgruppe, Sulfongruppe und Hydroxylgruppe an der Oberfläche des Farbmaterialteilchens gebunden ist und das Farbmaterialteilchen im Wasser dispergiert ist.

4. Aufzeichnungstinte nach einem der Ansprüche 1 bis 3, wobei das Volumenmittel des Teilchendurchmessers des Farbmaterialteilchens 5 nm bis 100 nm ist.

5. Aufzeichnungstinte nach einem der Ansprüche 1 bis 4, wobei das Volumenmittel des Teilchendurchmessers des Polymerteilchens 5 nm bis 200 nm ist.

6. Aufzeichnungstinte nach einem der Ansprüche 1 bis 5, wobei das wasserlösliche Lösungsmittel mindestens eines ausgewählt aus Glycerin, Diethylenglycol, 1,3-Butandiol und 3-Methyl-1,3-butandiol ist.

7. Aufzeichnungstinte nach einem der Ansprüche 1 bis 6, wobei die Aufzeichnungstinte eine von einer Polyolverbindung mit einer Kohlenstoffzahl von 8 oder mehr und einer Glycoletherverbindung umfasst.

8. Aufzeichnungstinte nach einem der Ansprüche 1 bis 7, wobei die Aufzeichnungstinte ein pH-regulierendes Mittel umfasst und das pH-regulierende Mittel mindestens eines ausgewählt aus Alkoholaminen, Alkalimetallhydroxiden, Ammoniumhydroxiden, Phosphoniumhydroxiden und Alkalimetallcarbonaten ist und der pH 7 oder mehr und weniger als 11 ist.

9. Aufzeichnungstinte nach einem der Ansprüche 1 bis 8, worin die Aufzeichnungstinte eine ausgewählt aus Cyan-Tinte, Magenta-Tinte, gelber Tinte und schwarzer Tinte ist.

10. Tintenkartusche, umfassend:
einen Behälter; und
eine Aufzeichnungstinte nach einem der Ansprüche 1 bis 9,
wobei die Aufzeichnungstinte in einem Behälter enthalten ist.

11. Tintenstrahl-Aufzeichnungsvorrichtung, umfassend:
eine Tintentröpfchen-Abgabeeinheit, die zur Abgabe von Aufzeichnungstintentröpfchen unter Bildung eines Bildes durch Stimulieren der Aufzeichnungstinte nach einem der Ansprüche 1 bis 9 geeignet ist.

12. Tintenstrahl-Aufzeichnungsvorrichtung nach Anspruch 11, wobei die Stimulierung mindestens eine ausgewählt aus Wärme, Druck, Vibration und Licht ist.

13. Tintenstrahl-Aufzeichnungsverfahren, umfassend:
Tintentröpfchen-Abgabe unter Bildung eines Bildes durch Stimulieren der Aufzeichnungstinte nach einem der Ansprüche 1 bis 9.

14. Tintenstrahl-Aufzeichnungsverfahren nach Anspruch 13, wobei die Stimulierung mindestens eine ausgewählt aus Wärme, Druck, Vibration und Licht ist.

15. Tintenaufzeichnung, umfassend:
ein Bild, das auf einem Aufzeichnungsmedium unter Verwendung der Aufzeichnungstinte nach einem der Ansprüche 1 bis 9 gebildet ist.

## Revendications

1. Encre d'enregistrement comprenant :
une particule de matière colorée,
une particule de polymère,
un solvant soluble dans l'eau,
un tensioactif anionique, et
de l'eau,
où la particule de matière colorée est une particule de pigment inorganique revêtue d'un parmi un pigment organique et le noir de carbone,
où le pigment organique comprend un choisi parmi un pigment noir d'aniline, un pigment de phtalocyanine, un pigment de quinacridone, un pigment jaune monoazoïque, un pigment jaune disazoïque et un pigment jaune hétérocyclique, et
le tensioactif anionique est un composé exprimé par la formule (1) suivante 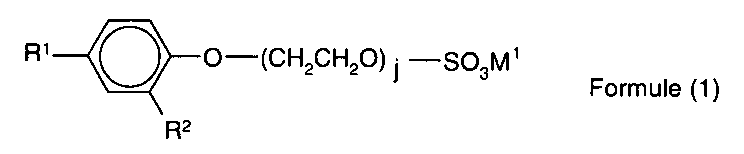 où, dans la formule (1), R¹ représente un groupe alkyle, un groupe benzyle, un groupe styryle ou un groupe distyryle, R² représente un atome d'hydrogène, un groupe alkyle, un groupe benzyle ou un groupe styryle, "j" représente un entier de 5 à 20, et M¹ représente un métal alcalin, l'ammonium, le phosphonium ou une alcanolamine.

2. Encre d'enregistrement selon la revendication 1 où la particule de pigment inorganique est une choisie parmi une particule de dioxyde de titane, une particule de silice, une particule d'alumine, une particule d'oxyde de fer, une particule d'hydroxyde de fer et une particule d'oxyde d'étain.

3. Encre d'enregistrement selon la revendication 1 ou la revendication 2 où l'un parmi un groupe carboxyle, un groupe carbonyle, un groupe sulfone et un groupe hydroxyle est lié sur la surface de la particule de matière colorée et la particule de matière colorée est dispersée dans l'eau.

4. Encre d'enregistrement selon l'une des revendications 1 à 3 où le diamètre de particule moyen en volume de la particule de matière colorée est 5 nm à 100 nm.

5. Encre d'enregistrement selon l'une des revendications 1 à 4 où le diamètre de particule moyen en volume de la particule de polymère est 5 nm à 200 nm.

6. Encre d'enregistrement selon l'une des revendications 1 à 5 où le solvant soluble dans l'eau est au moins un choisi parmi la glycérine, le diéthylèneglycol, le 1,3-butanediol et le 3-méthyl-1,3-butanediol.

7. Encre d'enregistrement selon l'une des revendications 1 à 6 où l'encre d'enregistrement comprend l'un parmi un composé polyol ayant un nombre de carbones de 8 ou plus et un composé éther de glycol.

8. Encre d'enregistrement selon l'une des revendications 1 à 7 où l'encre d'enregistrement comprend un agent de contrôle du pH et l'agent de contrôle du pH est au moins un choisi parmi les alcool-amines, les hydroxydes de métaux alcalins, les hydroxydes d'ammonium, les hydroxydes de phosphonium et les carbonates de métaux alcalins, et le pH est 7 ou plus et inférieur à 11.

9. Encre d'enregistrement selon l'une des revendications 1 à 8 où l'encre d'enregistrement est une choisie parmi une encre cyan, une encre magenta, une encre jaune et une encre noire.

10. Cartouche d'encre comprenant :
un récipient ; et
une encre d'enregistrement selon l'une des revendications 1 à 9,
où l'encre d'enregistrement est contenue dans un récipient.

11. Appareil d'enregistrement par jet d'encre comprenant :
une unité de projection de gouttes d'encre configurée pour projeter des gouttes d'encre d'enregistrement pour former une image par stimulation de l'encre d'enregistrement selon l'une des revendications 1 à 9.

12. Appareil d'enregistrement par jet d'encre selon la revendication 11 où la stimulation est au moins une choisie parmi la chaleur, la pression, la vibration et la lumière.

13. Procédé d'enregistrement par jet d'encre comprenant :
la projection de gouttes d'encre pour former une image par stimulation de l'encre d'enregistrement selon l'une des revendications 1 à 9.

14. Procédé d'enregistrement par jet d'encre selon la revendication 13 où la stimulation est au moins une choisie parmi la chaleur, la pression, la vibration et la lumière.

15. Enregistrement d'encre comprenant :
une image formée sur un support d'enregistrement au moyen de l'encre d'enregistrement selon l'une des revendications 1 à 9.
